# EUROPÄISCHE PATENTSCHRIFT

(11) **EP 3 659 743 B1**
(45) Veröffentlichungstag und Bekanntmachung des Hinweises auf die Patenterteilung: **11.11.2020**
(21) Anmeldenummer: 18208496.2
(22) Anmeldetag: 27.11.2018
(51) Int. Cl.: B23Q 1/66

(54) **DOPPELSCHWENKTRÄGERMASCHINE MIT ZWEI SCHWENKTISCHEN MIT EINANDER ÜBERLAPPENDEN SCHWENKBEREICHEN SOWIE ZUGEHÖRIGES BEARBEITUNGSVERFAHREN**
DOUBLE SWIVEL MOUNTING MACHINE WITH TWO SWIVEL TABLES WITH OVERLAPPING SWIVEL AREAS AS WELL AS THE CORRESPONDING PROCESSING METHODS
ENGIN PORTEUR PIVOTANT DOUBLE À DEUX TABLES PIVOTANTES POURVUES DE ZONES DE PIVOTEMENT SE CHEVAUCHANT MUTUELLEMENT AINSI QUE PROCÉDÉ D'USINAGE CORRESPONDANT

(43) Veröffentlichungstag der Anmeldung: 03.06.2020
(73) Patentinhaber: Schwäbische Werkzeugmaschinen GmbH, 78713 Schramberg-Waldmössingen (DE)
(72) Erfinder: Armleder, Wolfgang, 78628 Rottweil (DE)
(74) Vertreter: Kohler Schmid Möbus Patentanwälte

(56) Entgegenhaltungen:
- WO-A1-2014/029661
- DE-A1- 19 959 072
- DE-C1- 19 913 715

## Beschreibung

Die Erfindung betrifft eine Werkzeugmaschine zur insbesondere spanenden Bearbeitung von Werkstücken mit einem in einem Maschinengestell um eine Hauptachse drehbar gelagerten Doppelschwenkträger, welcher zwei, jeweils um eine zur Hauptachse des Doppelschwenkträgers parallele A-Achse drehbar gelagerte Schwenktische zur Aufnahme von Werkstücken aufweist, von denen der eine Schwenktisch auf einer Bearbeitungsseite und der andere Schwenktisch auf einer Beladeseite vorgesehen sind, wobei der bearbeitungsseitige Schwenktisch und der beladeseitige Schwenktisch durch Verschwenken des Doppelschwenkträgers vertauschbar sind. Die Erfindung betrifft ferner ein zugehöriges Bearbeitungsverfahren.

Eine derartige Doppelschwenkträgermaschine ist beispielsweise durch die DE 199 13 715 C1 bekannt geworden. Durch eine starre Trennwand am Doppelschwenkträger sind die Bearbeitungs- und Beladeseiten voneinander abgetrennt.

Nachteil von solchen Doppelschwenkträgermaschinen ist der sehr große Schwenkradius des Doppelschwenkträgers. Sehr großen Doppelschwenkträgermaschinen können daher nicht mehr 1-teilig gebaut und transportiert werden.

Es ist demgegenüber die Aufgabe der Erfindung, bei einer Doppelschwenkträgermaschine der eingangs genannten Art den Platzbedarf zu reduzieren.

Diese Aufgabe wird bei einer Werkzeugmaschine der eingangs genannten Art erfindungsgemäß dadurch gelöst, dass die Schwenkbereiche der beiden Schwenktische einander überlappen. Bevorzugt sind dabei der bearbeitungsseitige Schwenktisch innerhalb eines Bearbeitungsraumes und der beladeseitige Schwenktisch innerhalb eines Beladeraumes angeordnet.

Normalerweise müssen nicht gleichzeitig beide Schwenktische um ihre jeweilige Schwenkachse gedreht werden. In der Beladeposition genügt vor allem bei plattenförmigen Teilen meist eine Vorzugsstellung des beladeseitigen Schwenktisches. Durch die erfindungsgemäß einander überlappenden Schwenkbereiche der beiden Schwenktische lässt sich gegenüber bekannten Doppelschwenkträgermaschine der Schwenkradius des Doppelschwenkträgers reduzieren, was eine 1-teilige Bauweise und eine platzsparende Bauweise ermöglicht.

Sind die beiden A-Achsen symmetrisch zur Hauptachse angeordnet, ist der Abstand zwischen der Hauptachse und den A-Achsen erfindungsgemäß jeweils kleiner als der Umkreisradius der Schwenktische um ihre jeweilige A-Achse. Sind die beiden A-Achsen hingegen asymmetrisch zur Hauptachse angeordnet, ist der Abstand der beiden A-Achsen erfindungsgemäß kleiner als der Umkreisdurchmesser der Schwenktische um ihre jeweilige A-Achse.

Zum Auflegen von insbesondere plattenförmigen Werkstücken ist es vorteilhaft, wenn sich der beladeseitige Schwenktisch in einer gegenüber der Senkrechten um maximal 20°, bevorzugt maximal 10°, geneigten Beladeposition befindet, um das Werkstück an den beladeseitigen Schwenktisch anlehnen zu können, bevor es dann hydraulisch am Schwenktisch festgespannt wird.

Vorzugsweise sind die Bearbeitungsseite und die Beladeseite des Doppelschwenkträgers in den beiden Schwenkendpositionen des Doppelschwenkträgers, also wenn sich der bearbeitungsseitige Schwenktisch in Bearbeitungsposition und der beladeseitige Schwenktisch in Beladeposition befinden, durch eine Trennwand voneinander dauerhaft abgetrennt oder nur temporär abtrennbar. Die Trennwand schützt den Beladebereich vor Emissionen, wie Kühlschmierstoff, Späne und Lärm, und besitzt eine ausreichende Rückhaltefähigkeit gegenüber Bruchteilen von beschädigten Werkzeugen. Falls die Zeit für den Be- und Entladevorgang kleiner als die Bearbeitungszeit ist, genügt unter Umständen eine temporäre Abtrennung.

In einer besonders bevorzugten Ausführungsform der Erfindung weist der Doppelschwenkträger zwei Schwenkscheiben, zwischen und an denen die beiden Schwenktische um ihre A-Achsen drehbar gelagert sind, und das Maschinengestell zwei Führungsnuten auf, zwischen und in denen die Trennwand verschiebbar geführt ist. Die beiden Schwenkscheiben haben innenseitig zu beiden Seiten der Hauptachse jeweils zwei Führungsnuten für die Trennwand. In den beiden Schwenkendpositionen des Doppelschwenkträgers mündet die maschinengestellseitige Führungsnut jeweils in eine der beiden Führungsnuten, so dass die Trennwand in diese Führungsnut eingeschoben werden kann, um die Bearbeitungs- und Beladeseiten asymmetrisch zur Hauptachse voneinander abzutrennen. Vorzugsweise ist die Trennwand in den Führungsnuten der Schwenkscheiben abgedichtet.

In einer vorteilhaften Weiterbildung dieser Ausführungsform weisen die Führungsnuten der Seitenscheiben jeweils mindestens eine Nutweiche auf, um die beiden Führungsnuten jeweils in zwei unterschiedliche Nutabschnitte aufzuteilen. Je nach Bedarf kann die Trennwand in den einen oder anderen Nutabschnitt eingeschoben werden, um so die Bearbeitungs- und Beladeräume variabel aufzuteilen. Insbesondere wenn die maschinengestellseitige Führungsnuten oder die Führungsnuten der Seitenscheiben einen nicht-geradlinigen Führungsabschnitt aufweisen, muss die Trennwand entsprechend biegsam oder biegbar ausgeführt sein. Dazu kann die Trennwand beispielsweise als Rollladen, Gliederschürze oder biegsame Wand ausgebildet sein.

Die Erfindung betrifft in einem weiteren Aspekt auch ein Verfahren zum insbesondere spanenden Bearbeiten von Werkstücken mit einer wie oben beschriebenen Werkzeugmaschine, wobei erfindungsgemäß vor dem Drehen des bearbeitungsseitigen Schwenktisches um seine A-Achse der beladeseitige Schwenktisch aus dem Schwenkbereich des bearbeitungsseitigen Schwenktisches herausgedreht wird.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Die Erfindung ist in den Figuren schematisch dargestellt, so dass die wesentlichen Merkmale der Erfindung gut zu erkennen ist. Die Darstellungen sind nicht notwendigerweise maßstäblich zu verstehen.

Es zeigt:
- Fig. 1: schematisch eine erfindungsgemäße horizontale Doppelschwenkträgermaschine mit zwei Schwenktischen als Werkstückträger in einer Längsschnittansicht;
- Fign. 2a-2d: verschiedene Drehstellungen der beiden Schwenktische beim Beladen und Bearbeiten von Werkstücken; und
- Fig. 3: eine modifizierte Führungsnut für eine Trennwand.

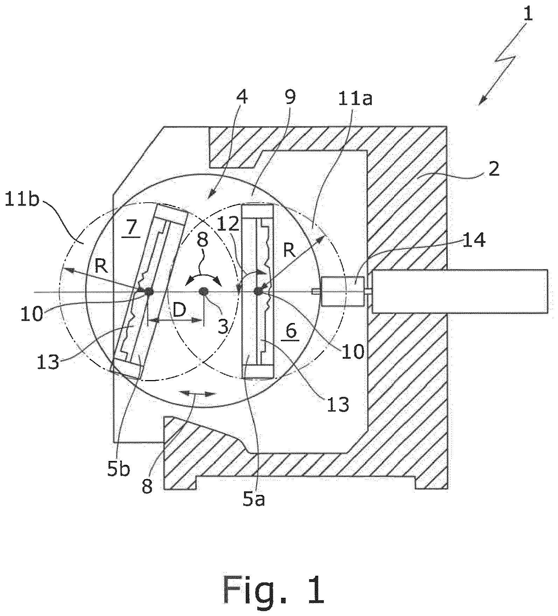

Die in **Fig. 1** insgesamt mit **1** bezeichnete Werkzeugmaschine dient zur spanenden Bearbeitung von Werkstücken und weist einen im rahmenartigen Maschinengestell **2** um eine horizontale Hauptachse **3** schwenkbar gelagerten Doppelschwenkträger **4** mit zwei Schwenktischen **5a**, **5b** als Werkstückträger auf. Der eine Schwenktisch 5a (in Fig. 1 der rechte) ist auf der Bearbeitungsseite **6** innerhalb eines Bearbeitungsraums und der andere Schwenktisch 5b (in Fig. 1 der linke) auf der Belade- oder Bestückungsseite **7** innerhalb eines Beladeraums vorgesehen. Durch pendelndes Verschwenken (Pfeilrichtung **8**) des Doppelschwenkträgers 4 um die Hauptachse 3 um 180° lassen sich der bearbeitungsseitige Schwenktisch 5a und der beladeseitige Schwenktisch 5b vertauschen. Der Doppelschwenkträger 4 weist zwei Schwenkscheiben **9** auf, welche seitlich am Maschinengestell 2 um die Hauptachse 3 gelagert sind. Zwischen und an den beiden Schwenkscheiben 9 sind die beiden Schwenktische 5a, 5b jeweils um eine horizontale Schwenkachse (A-Achse) **10** verschwenkbar gelagert. Die Bearbeitungs- und Beladeräume sind entweder jeweils in sich geschlossene Maschinenräume oder bilden gemeinsam einen in sich geschlossenen Maschinenraum.

Normalerweise müssen nicht gleichzeitig beide Schwenktische 5a, 5b um ihre jeweilige A-Achse 10 gedreht werden. In der Beladeposition genügt vor allem bei plattenförmigen Werkstücken meist eine vertikale oder leicht geneigte Vorzugsstellung des beladeseitigen Schwenktisches 5b. Für eine platzsparende Bauweise ist daher der Abstand **D** zwischen der Hauptachse 3 und den A-Achsen 10 jeweils kleiner als der Umkreisradius **R** der Schwenktische 5a, 5b um ihre jeweilige A-Achse 10, so dass die Schwenkbereiche **11a, 11b** der beiden Schwenktische 5a, 5b einander überlappen. Nur dann, wenn der beladeseitige Schwenktisch 5b vertikal oder leicht geneigt ausgerichtet ist, kann der bearbeitungsseitige Schwenktisch 5a um seine A-Achse 10 in Schwenkrichtung **12** uneingeschränkt, z.B. um 90° oder 180°, gedreht werden.

Statt wie in Fig. 1 symmetrisch zur Hauptachse 3, können die beiden A-Achsen 10 auch asymmetrisch zur Hauptachse 3 angeordnet sein; in diesem Fall ist der Abstand der beiden A-Achsen 10 erfindungsgemäß kleiner als der Umkreisdurchmesser der Schwenktische 5a, 5b um ihre jeweilige A-Achse 10.

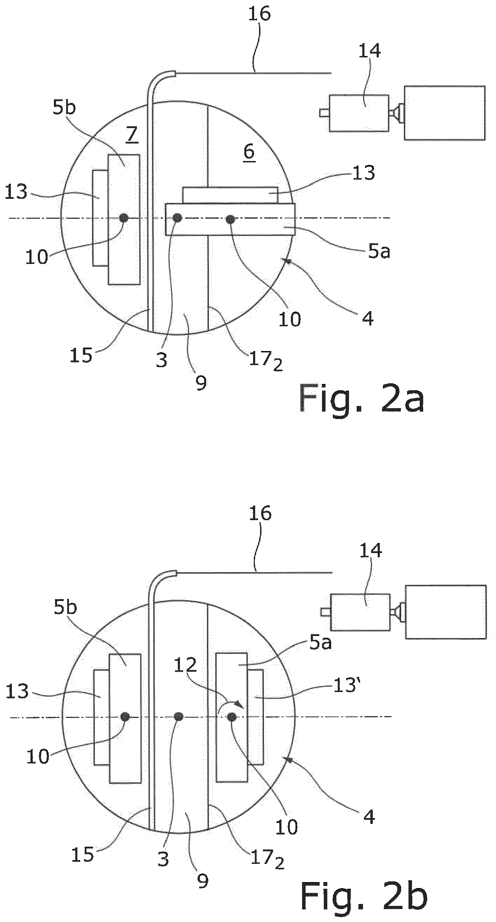

Die Funktionsweise der Werkzeugmaschine 1 wird nachfolgend anhand der Fign. 2a bis 2d beschrieben.

Der vertikal oder, wie in Fig. 1 gezeigt, um ca. 10° bis 20° geneigt ausgerichtete beladeseitige Schwenktisch 5b wird bei geöffneter Beladetür (nicht gezeigt) mit neuen Werkstücken **13** auf der Beladeseite 7 bestückt. Der bearbeitungsseitige Schwenktisch 5a ist horizontal ausgerichtet, und die daran gehaltenen Werkstücke 13 werden mittels eines in einer horizontalen Arbeitsspindel **14** aufgenommenen Werkzeuges auf der Bearbeitungsseite 6 bearbeitet (**Fig. 2a**).

Wenn die Werkstücke **13'** fertig bearbeitet sind, wird der bearbeitungsseitige Schwenktisch 5a um seine A-Achse 10 in Schwenkrichtung 12 um 90° in eine vertikale Stellung gedreht (**Fig. 2b**).

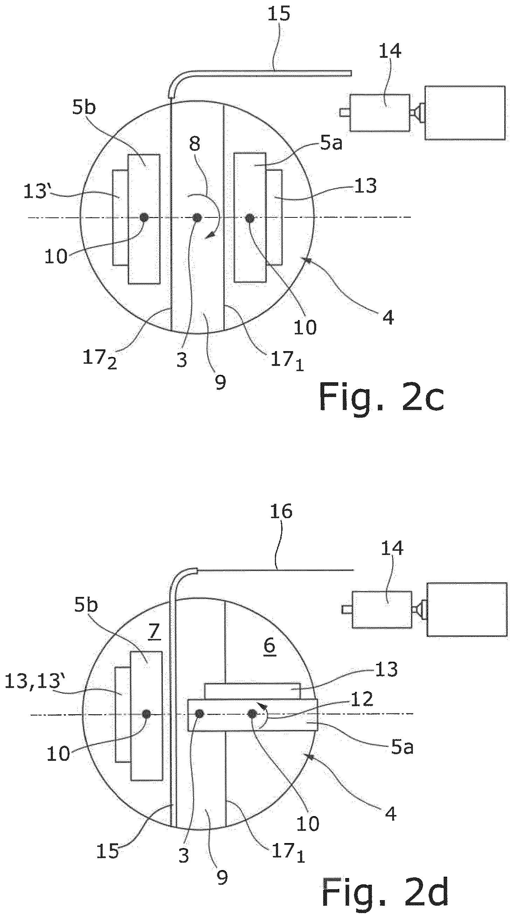

Durch Drehen des Doppelschwenkträgers 4 um die Hauptachse 3 in Schwenkrichtung 8 um 180° werden der bearbeitungsseitige Schwenktisch 5a und der beladeseitige Schwenktisch 5b vertauscht (**Fig. 2c**).

Der nun bearbeitungsseitige Schwenktisch 5a wird anschließend um seine A-Achse 10 in Schwenkrichtung 12 um 90° in die horizontale Bearbeitungsstellung gedreht (**Fig. 2d**), in der die daran gehaltenen Werkstücke 13 mittels des Werkzeugs der Arbeitsspindel 14 bearbeitet werden. Gleichzeitig werden die fertig bearbeiteten Werkstücke 13' von dem nun beladeseitigen Schwenktisch 5b entladen, und der beladeseitige Schwenktisch 5b wird wieder mit neuen Werkstücken 13 bestückt.

Die Werkstücke 13 können an den Schwenktischen 5a, 5b auch um eine zur A-Achse 10 rechtwinklige C-Achse drehbar gelagert sein. Mit der in drei Achsen verfahrbaren Arbeitsspindeln 14, mit den jeweils um ihre A-Achse 10 verschwenkbaren Schwenktischen 5a, 5b und mit der am Schwenktisch um die C-Achse drehbar gelagerten Werkstückaufnahme ergibt sich somit insgesamt eine 5-achsige Doppelschwenkträgermaschine.

Wie in den Fign. 2a bis 2d weiter gezeigt, können die Bearbeitungs- und Beladeseiten 6, 7 des Doppelschwenkträgers 4 in den beiden Schwenkendpositionen des Doppelschwenkträgers 4, also wenn sich der bearbeitungsseitige Schwenktisch 5a in Bearbeitungsposition und der beladeseitige Schwenktisch 5b in Beladeposition befinden, durch eine Trennwand **15** voneinander abgetrennt werden. Auf diese Weise kann während des Bearbeitens der Werkstücke 13 auf der Bearbeitungsseite 6 ein neues Werkstück 13 auf der Beladeseite 7 aufgespannt werden, wobei das Bedienungspersonal vor spritzendem Bohrwasser oder herumfliegenden Bohrspänen etc. geschützt ist. Die Trennwand 15 schützt den Beladebereich vor Emissionen wie Kühlschmierstoff, Späne, Lärm etc. und besitzt eine ausreichende Rückhaltefähigkeit gegenüber Bruchteilen von beschädigten Werkzeugen.

Das Maschinengestell 2 weist zwei Führungsnuten (oder Führungskulissen) 16 auf, zwischen und in denen die Trennwand 15 verschiebbar geführt ist. Die beiden Schwenkscheiben 9 weisen innenseitig jeweils zwei parallele Führungsnuten (oder Führungskulissen) **17₁**, **17₂** für die Trennwand 15 auf, die zu beiden Seiten der Hauptachse 10 und mit gleichem Abstand zur Hauptachse 10 verlaufen. In den beiden Schwenkendpositionen des Doppelschwenkträgers 4 mündet die maschinengestellseitige Führungsnut 16 jeweils in eine der beiden Führungsnuten 17₁, 17₂ (in Fign. 2a bis 2d jeweils in die linke), so dass die Trennwand 15 in die linke Führungsnut eingeschoben werden kann, um die Bearbeitungs- und Beladeseiten 6, 7 asymmetrisch zur Hauptachse 3 voneinander abzutrennen. Vor dem Drehen des Doppelschwenkträges 4 um die Hauptachse 3 muss die Trennwand 15 vollständig aus der linken Führungsnut zurückgeschoben sein. Nach dem Schenken des Doppelschenkträgers 4 wird der Beladeraum vom Arbeitsraum durch die Trennwand 15 getrennt, d.h., der Beladeraum wird nur temporär vom Gesamtraum abgetrennt. Die Trennwand 15 ist in den Führungsnuten 17₁, 17₂ bzw. gegenüber den Schwenkscheiben 9 abgedichtet.

Die maschinengestellseitige Führungsnut 16 weist einen - hier lediglich beispielhaft ¼-kreisförmig gebogenen - nicht-geradlinigen Führungsabschnitt auf, so dass die Trennwand 15 entsprechend biegsam oder biegbar ausgeführt sein muss. Die Trennwand 16 kann dazu beispielsweise als ein Rollladen, der um eine parallel zur Hauptachse verlaufende Achse ab- bzw. aufwickelbar ist, als eine flexible Gliederschürze oder als eine biegsame Wand ausgebildet sein.

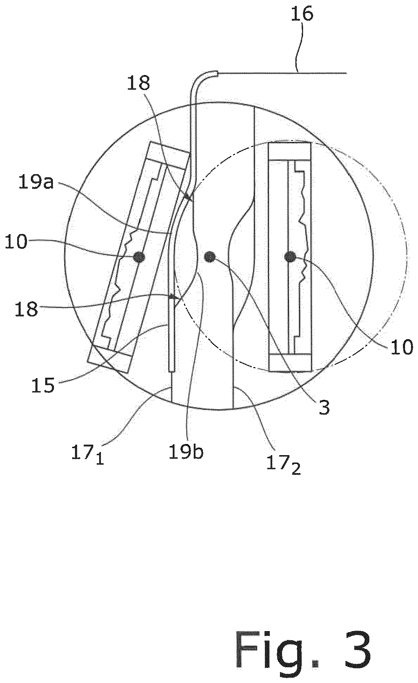

Die in **Fig. 3** gezeigten Führungsnuten 17₁, 17₂ weisen zusätzlich eine zweifache Nutweiche **18** auf, um die beiden Führungsnuten jeweils in einen bezüglich der Hauptachse 10 radial äußeren Nutabschnitt **19a** und einen bezüglich der Hauptachse 10 radial inneren Nutabschnitt **19b** aufzuteilen. Je nach Bedarf kann die Trennwand 15 in den äußeren oder inneren Nutabschnitt 19a, 19b eingeschoben werden, um so die Bearbeitungs- und Beladeräume variabel aufzuteilen. Die beiden Führungsnuten 17₁, 17₂ mit ihren jeweiligen Nutabschnitten 19a, 19b verlaufen zueinander punktsymmetrisch zur Hauptachse 3.

## Patentansprüche

1. Werkzeugmaschine (1) zur insbesondere spanenden Bearbeitung von Werkstücken (13) mit einem in einem Maschinengestell (2) um eine Hauptachse (3) drehbar gelagerten Doppelschwenkträger (4), welcher zwei, jeweils um eine zur Hauptachse (3) parallele A-Achse (10) drehbar gelagerte Schwenktische (5a, 5b) zur Aufnahme von Werkstücken (13) aufweist, von denen der eine Schwenktisch (5a) auf einer Bearbeitungsseite (6) und der andere Schwenktisch (5b) auf einer Beladeseite (7) vorgesehen sind, wobei der bearbeitungsseitige Schwenktisch (5a) und der beladeseitige Schwenktisch (5b) durch Verschwenken des Doppelschwenkträgers (4) vertauschbar sind,
**dadurch gekennzeichnet,**
**dass** die Schwenkbereiche (11a, 11b) der beiden Schwenktische (5a, 5b) einander überlappen.

2. Werkzeugmaschine nach Anspruch 1, **dadurch gekennzeichnet, dass** der Abstand (D) zwischen der Hauptachse (3) und den A-Achsen (10) jeweils kleiner ist als der Umkreisradius (R) der Schwenktische (5a, 5b) um ihre jeweilige A-achse (10).

3. Werkzeugmaschine nach Anspruch 1 oder 2, **dadurch gekennzeichnet, dass** der bearbeitungsseitige Schwenktisch (5a) innerhalb eines Bearbeitungsraumes und der beladeseitige Schwenktisch (5b) innerhalb eines Beladeraumes angeordnet sind.

4. Werkzeugmaschine nach einem der vorhergehenden Ansprüche, **dadurch gekennzeichnet, dass** sich der beladeseitige Schwenktisch (5b) zum Auflegen von insbesondere plattenförmigen Werkstücken (13) in einer gegenüber der Senkrechten um maximal 20°, bevorzugt maximal 10°, geneigten Beladeposition befindet.

5. Werkzeugmaschine nach einem der vorhergehenden Ansprüche, **dadurch gekennzeichnet, dass** die Bearbeitungsseite (6) und die Beladeseite (7) des Doppelschwenkträgers (4) in den beiden Schwenkendpositionen des Doppelschwenkträgers (4) durch eine Trennwand (15) voneinander abtrennbar sind.

6. Werkzeugmaschine nach Anspruch 5, **dadurch gekennzeichnet, dass** der Doppelschwenkträger (4) zwei Schwenkscheiben (9) aufweist, zwischen und an denen die beiden Schwenktische (5a, 5b) um ihre A-Achsen (10) drehbar gelagert sind, dass das Maschinengestell (2) zwei Führungsnuten (16) aufweist, zwischen und in denen die Trennwand (15) verschiebbar geführt ist, und dass die beiden Schwenkscheiben (9) innenseitig zu beiden Seiten der Hauptachse (3) jeweils zwei Führungsnuten (17₁, 17₂) für die Trennwand (15) aufweisen, wobei in den beiden Schwenkendpositionen des Doppelschwenkträgers (4) die maschinengestellseitige Führungsnut (16) jeweils in eine der beiden Führungsnuten (17₁, 17₂) mündet.

7. Werkzeugmaschine nach Anspruch 6, **dadurch gekennzeichnet, dass** die Führungsnuten (17₁, 17₂) der Seitenscheiben (9) jeweils mindestens eine Nutweiche (18) aufweisen.

8. Werkzeugmaschine nach Anspruch 6 oder 7, **dadurch gekennzeichnet, dass** die Trennwand (15) in den Führungsnuten (17₁, 17₂) der Schwenkscheiben (9) abgedichtet ist.

9. Werkzeugmaschine nach einem der Ansprüche 5 bis 8, **dadurch gekennzeichnet, dass** die Trennwand (15) um eine parallel zur Hauptachse (3) verlaufende Achse biegbar ist.

10. Werkzeugmaschine nach einem der Ansprüche 5 bis 9, **dadurch gekennzeichnet, dass** die Trennwand (15) als Rollladen, Gliederschürze oder biegsame Wand ausgebildet ist.

11. Verfahren zum insbesondere spanenden Bearbeiten von Werkstücken (13) mit einer Werkzeugmaschine (1) nach einem der vorhergehenden Ansprüche, wobei vor dem Drehen des bearbeitungsseitigen Schwenktisches (5a) um seine A-Achse (10) der beladeseitige Schwenktisch (5b) aus dem Schwenkbereich (11a) des bearbeitungsseitigen Schwenktisches (5a) herausgedreht wird.

## Claims

1. Machine tool (1) for, in particular, machining processing of workpieces (13) comprising a double swivel support (4) which is mounted in a machine frame (2) such that it can be rotated about a main axis (3) and comprises two swivel tables (5a, 5b) which are each mounted for rotation about an A axis (10) which is parallel to the main axis (3) for receiving workpieces (13), one (5a) of the swivel tables being provided on a processing side (6) and the other swivel table (5b) being provided on a loading side (7), wherein the swivel table (5a) on the processing side and the swivel table (5b) on the loading side can be exchanged by swivelling the double swivel support (4),
**characterized in that**
the swivel ranges (11a, 11b) of the two swivel tables (5a, 5b) overlap one another.

2. Machine tool according to claim 1, **characterized in that** the distance (D) between the main axis (3) and the A axes (10) is smaller in each case than the circumradius (R) of the swivel tables (5a, 5b) about their respective A axes (10).

3. Machine tool according to claim 1 or 2, **characterized in that** the swivel table (5a) on the processing side is arranged within a processing space and the swivel table (5b) on the loading side is arranged within a loading space.

4. Machine tool according to any one of the preceding claims, **characterized in that** the swivel table (5b) on the loading side is positioned in a loading position which is inclined by maximally 20°, preferably maximally 10°, with respect to the vertical, for depositing, in particular, plate-shaped workpieces (13).

5. Machine tool according to any one of the preceding claims, **characterized in that** the processing side (6) and the loading side (7) of the double swivel support (4) can be separated by a separating wall (15) in the two swivel end positions of the double swivel support (4).

6. Machine tool according to claim 5, **characterized in that** the double swivel support (4) comprises two swivel discs (9), between which and on which the two swivel tables (5a, 5b) are mounted such that they can be rotated about their A axes (10), that the machine frame (2) comprises two guiding groves (16), between which and in which the separating wall (15) is displaceably guided, and that the two swivel discs (9) each comprise two guiding grooves (17₁, 17₂) for the separating wall (15) on the inner side on both sides of the main axis (3), wherein in the two swivel end positions of the double swivel support (4), the guiding groove (16) on the machine frame side terminates in one of the two guiding grooves (17₁, 17₂) in each case.

7. Machine tool according to claim 6, **characterized in that** the guiding grooves (17₁, 17₂) of the side discs (9) each comprise at least one groove switch (18).

8. Machine tool according to claim 6 or 7, **characterized in that** the separating wall (15) is sealed in the guiding grooves (17₁, 17₂) of the swivel discs (9).

9. Machine tool according to any one of the claims 5 to 8, **characterized in that** the separating wall (15) can be bent about an axis that extends parallel to the main axis (3).

10. Machine tool according to any one of the claims 5 to 9, **characterized in that** the separating wall (15) is designed in the form of a shutter, link apron or bendable wall.

11. Method of, in particular, machining processing of workpieces (13) with a machine tool (1) according to any one of the preceding claims, wherein prior to rotation of the swivel table (5a) on the processing side about its A axis (10), the swivel table (5b) on the loading side is rotated out of the swivel range (11a) of the swivel table (5a) on the processing side.

## Revendications

1. Machine-outil (1) dévolue à l'usinage de pièces (13), notamment par enlèvement de copeaux, équipée d'un support (4) à double pivot monté à rotation autour d'un axe principal (3), dans un bâti (2) de la machine, et muni de deux plateaux pivotants (5a, 5b) qui sont respectivement montés à rotation autour d'un axe A (10) parallèle audit axe principal (3), sont conçus pour recevoir des pièces (13), et parmi lesquels l'un (5a) des plateaux pivotants est prévu sur un côté usinage (6) et l'autre plateau pivotant (5b) est prévu sur un côté chargement (7), sachant que ledit plateau pivotant (5a) situé côté usinage et ledit plateau pivotant (5b) situé côté chargement peuvent être permutés par pivotement imprimé au support (4) à double pivot,
**caractérisée par le fait**
**que** les plages de pivotement (11a, 11b) des deux plateaux pivotants (5a, 5b) se chevauchent mutuellement.

2. Machine-outil selon la revendication 1, **caractérisée par le fait que** la distance (D) comprise entre l'axe principal (3) et les axes A (10) est inférieure, à chaque fois, au rayon (R) de la circonférence décrite par les plateaux pivotants (5a, 5b) autour de leur axe A (10) respectif.

3. Machine-outil selon la revendication 1 ou 2, **caractérisée par le fait que** le plateau pivotant (5a) situé côté usinage et le plateau pivotant (5b) situé côté chargement sont disposés, respectivement, à l'intérieur d'un espace d'usinage et à l'intérieur d'un espace de chargement.

4. Machine-outil selon l'une des revendications précédentes, **caractérisée par le fait que** le plateau pivotant (5b) situé côté chargement occupe un emplacement de chargement incliné au maximum de 20°, de préférence de 10° au maximum par rapport à la verticale, en vue de procurer un appui à des pièces (13) notamment en forme de plaques.

5. Machine-outil selon l'une des revendications précédentes, **caractérisée par le fait que** le côté usinage (6) et le côté chargement (7) du support (4) à double pivot peuvent être séparés l'un de l'autre par une cloison séparatrice (15) aux deux emplacements de pivotement extrême dudit support (4) à double pivot.

6. Machine-outil selon la revendication 5, **caractérisée par le fait que** le support (4) à double pivot est pourvu de deux disques pivotants (9) entre, et sur lesquels les deux plateaux pivotants (5a, 5b) sont montés à rotation autour de leurs axes A (10) ; **par le fait que** le bâti (2) de la machine comporte deux rainures de guidage (16) entre, et dans lesquelles la cloison séparatrice (15) est guidée à coulissement ; et **par le fait que** les deux disques pivotants (9) sont respectivement munis à leurs faces intérieures, de part et d'autre de l'axe principal (3), de deux rainures de guidage (17₁, 17₂) affectées à ladite cloison séparatrice (15), sachant que la rainure de guidage (16) située côté bâti de la machine débouche, à chaque fois, dans l'une deux rainures de guidage (17₁, 17₂) aux deux emplacements de pivotement extrême dudit support (4) à double pivot.

7. Machine-outil selon la revendication 6, **caractérisée par le fait que** les rainures de guidage (17₁, 17₂) des disques latéraux (9) présentent, à chaque fois, au moins une bifurcation (18).

8. Machine-outil selon la revendication 6 ou 7, **caractérisée par le fait que** l'étanchéité de la cloison séparatrice (15) est assurée dans les rainures de guidage (17₁, 17₂) des disques pivotants (9).

9. Machine-outil selon l'une des revendications 5 à 8, **caractérisée par le fait que** la cloison séparatrice (15) est apte à fléchir autour d'un axe s'étendant parallèlement à l'axe principal (3).

10. Machine-outil selon l'une des revendications 5 à 9, **caractérisée par le fait que** la cloison séparatrice (15) est réalisée sous la forme d'un volet roulant, d'un tablier sectionnel ou d'une paroi flexible.

11. Procédé d'usinage de pièces (13), notamment par enlèvement de copeaux, à l'aide d'une machine-outil (1) conforme à l'une des revendications précédentes, dans lequel, préalablement à la rotation du plateau pivotant (5a) situé côté usinage, autour de son axe A (10), le plateau pivotant (5b) situé côté chargement est animé d'une rotation l'éloignant de la plage de pivotement (11a) dudit plateau pivotant (5a) situé côté usinage.
